# EUROPÄISCHE PATENTANMELDUNG

(11) **EP 0 618 140 A1**
(43) Veröffentlichungstag der Anmeldung: **05.10.1994**
(21) Anmeldenummer: 94102032.3
(22) Anmeldetag: 10.02.1994
(51) Int. Cl.: B65B 51/14, B29C 65/22

(54) **Vorrichtung zum Verschweissen von Kunststoffbeuteln**

(30) Priorität: 23.03.1993 DE 9304300 U
(71) Anmelder: Paper Converting Machine GmbH, D-67105 Schifferstadt (DE)
(72) Erfinder: Wald, Ulrich, D-67454 Hassloch (DE)
(74) Vertreter: Brommer, Hans Joachim, Dr.-Ing.

(57) **Zusammenfassung**

Die Erfindung betrifft eine Vorrichtung zum Verschweißen von Kunststoffbeuteln mit einem Schweißbalken, der einen elektrisch beheizten Schweißdraht (3) aufweist. Wesentlich ist, daß der Schweißdraht von einem Kunststoffschlauch (8) umgeben ist, durch den sowohl die bisherige Unterlage des Schweißdrahtes als auch seine Abdeckung gegenüber dem Kunststoffbeutel ersetzt werden.

## Beschreibung

Die Erfindung geht aus von einer Vorrichtung zum Verschweißen von heißsiegelbaren Verpackungsfolien, insbesondere zum Warmpreßschweißen von Kunststoffbeuteln, mit einem oder mit zwei gegeneinander fahrenden Schweißbalken, wobei zumindest an dem einen Schweißbalken ein elektrisch beheizter Schweißdraht angeordnet ist, der an seiner den Folien zugewandten Seite eine Abdeckung aufweist.

Bei derartigen bekannten Schweißvorrichtungen bedarf der Schweißdraht einer Abdeckung, damit er nicht mit der zu verschweißenden Kunststoffolie verklebt. Meist ist der Schweißdraht nicht unmittelbar auf dem Schweißbalken verlegt, sondern auf einer elastischen Silikon-Unterlage; in diesem Fall ist eine weitere Kunststofflage zum Schutz der Silikon-Unterlage zwischen ihr und dem Schweißdraht erforderlich. Sowohl diese Zwischenlage wie auch die zuerst genannte äußere Abdeckung bestehen aus schmalen Kunststoffbändern, die jeweils einzeln am Schweißbalken fixiert werden.

Durch die hohe mechanische und thermische Belastung der genannten Kunststofflagen unterliegen sie einem starken Verschleiß und müssen mehrmals monatlich, in Extremfällen sogar einmal pro Schicht ausgetauscht werden.

Hiervon ausgehend liegt der vorliegenden Erfindung die Aufgabe zugrunde, die eingangs beschriebene Schweißvorrichtung hinsichtlich des Austausches der Kunststofflagen zu verbessern und sie insgesamt bedienungsfreundlicher zu gestalten.

Diese Aufgabe wird in überraschend einfacher, aber nicht naheliegender Weise dadurch gelöst, daß anstelle der bisherigen bandförmigen Abdeckung bzw. Zwischenlage ein den Schweißdraht umgebender Schlauch verwendet wird.

Dadurch ergibt sich zunächst der Vorteil, daß die bisherigen, separaten Kunststofflagen durch ein einziges Element ersetzt werden und daß demzufolge auch nur dieses eine Element am Schweißbalken fixiert werden muß. Eine andere wesentliche Erleichterung ergibt sich dadurch, daß der Schweißdraht als Führung für den Kunststoffschlauch fungiert, so daß das bisher notwendige Ausrichten der Kunststofflagen entfällt und auch beim anschließenden Schweißbetrieb ein besserer Halt gegeben ist. Nicht zuletzt ergibt sich ein besserer Schutz der zu verschweißenden Folie wie auch der unter dem Schweißdraht verlaufenden Silikon-Unterlage, da der erfindungsgemäße Schlauch den Schweißdraht nicht nur an seinen Flachseiten, sondern allseits umgibt.

Besonders zweckmäßig ist es, wenn der Schlauch nicht mit dem Schweißbalken verklebt wird, wie dies bisher meist bei den Kunststofflagen der Fall ist, sondern wenn er an einem Ende außerhalb der Arbeitsbreite des Schweißdrahtes an ihm oder am Schweißbalken fixiert wird.

Vorzugsweise wird als Material für den Schlauch Kunststoff, insbesondere Teflon verwendet. Dabei spielt es keine Rolle, ob der Schweißdraht wie bisher nicht direkt auf dem Schweißbalken, sondern auf einem Kunststoff-Einsatz angeordnet ist.

Weitere Einzelheiten und Merkmale der Erfindung ergeben sich aus der nachfolgenden Beschreibung eines Ausführungsbeispieles anhand der Zeichnung; dabei zeigt
- Figur 1: eine Seitenansicht des Schweißbalkens und
- Figur 2: einen vergrößerten Querschnitt längs der Linie II-II in Figur 1.

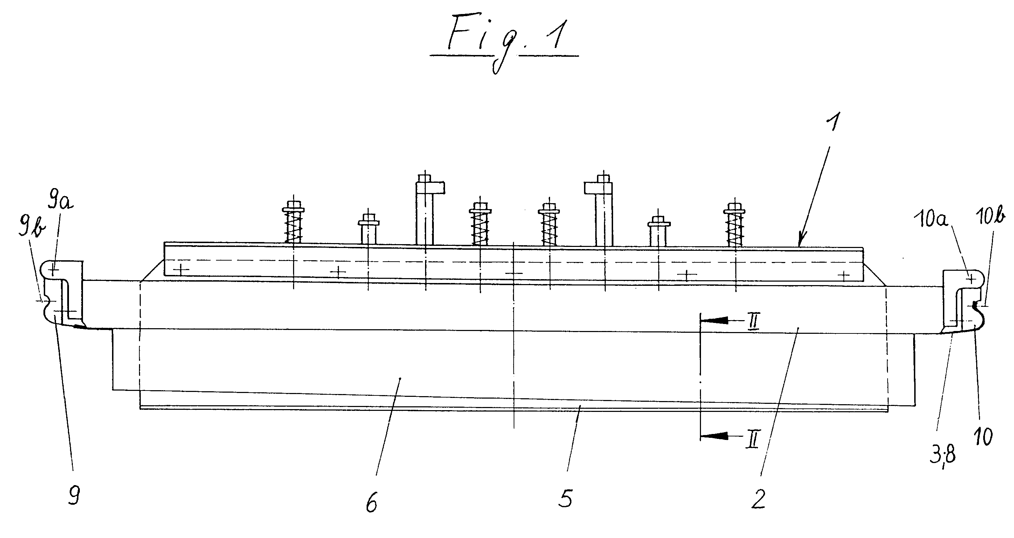

In Figur 1 erkennt man einen herkömmlichen Schweißbalken 1, der sich über die Breite der zu verschweißenden Verpackungsfolien erstreckt und beidseitig etwas über diese hinausragt. Er besteht aus der eigentlichen Schweißleiste 2, die an ihrer am anderen, nicht gezeigten Schweißbalken zugewandten Seite einen Schweißdraht 3, meist aus Kupfer, trägt, aus zwei Klemmbacken 4 und 5, die in Klemmrichtung federnd an der Schweißleiste 2 gelagert sind und aus einem im Zwischenraum zwischen den beiden Klemmbacken verlaufenden Messer 6.

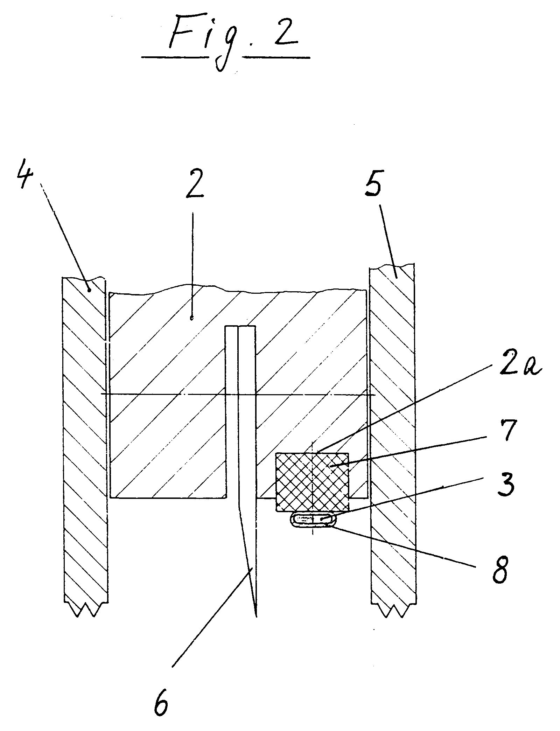

Figur 2 zeigt die Anordnung und den Aufbau des Schweißdrahtes 3 an der Schweißleiste 2. Dabei ist in eine Nut 2a der Schweißleiste eine elastische Silikon-Unterlage 7 eingebracht, die als Toleranzausgleich und Dämpfungselement für den Schweißdraht 3 fungiert.

Wesentlich ist nun, daß der auf der Silikon-Unterlage 7 verspannte Schweißdraht 3 von einem Teflonschlauch 8 umhüllt ist. Dabei ist der Schlauch so bemessen, daß er den Schweißdraht weitgehend faltenfrei und nur mit geringem Spiel umgibt. Dadurch läßt sich der Schlauch leicht überziehen, ohne daß die Gefahr besteht, daß durch lokale Faltenbildung die Qualität der Schweißnaht beeinträchtigt wird. Zweckmäßig ist der Schlauch durch Falten eines schmalen Kunststoffbandes hergestellt, derart, daß seine Ränder sich nahezu über den halben Umfang überlappen und dort miteinander verklebt sind. Der Schlauch wird so verlegt, daß der Überlappungsbereich auf der Silikon-Unterlage 7 ruht. Dadurch wird die Verlustwärme, die vom Schweißdraht auf die Silikon-Unterlage bzw. auf die Schweißleiste übertragen wird, verringert und die für den Schweißvorgang zur Verfügung stehende Wärmeenergie entsprechend erhöht.

Der Schweißdraht wie auch der Teflonschlauch erstrecken sich über die gesamte Länge der Schweißleiste 2. Ihre Fixierung an der Schweißleiste erfolgt durch endständig angeordnete Klemmvorrichtungen 9 und 10, die bei 9a bzw. 10a schwenkbar an der Schweißleiste 2 gelagert sind und an denen der Schweißdraht aus der Schweißebene herausgeführt und bei 9b bzw. 10b verklemmt wird. Der Schlauch 8 hört am linken Ende des Schweißbalkens bereits vor Erreichen der Klemmvorrichtung auf, wogegen er am rechten Ende weiterläuft und zusammen mit dem Schweißdraht bei 10b verklemmt wird.

Durch strichpunktierte Linien angedeutete Federn drücken die Klemmvorrichtungen 9 und 10 nach außen und halten somit den Schweißdraht gespannt. Gleichzeitig wird durch diese Verspannung auch der Schlauch 8 sicher an der Schweißleiste gehalten.

In der Praxis arbeitet der gezeigte Schweißbalken meist mit einem ähnlichen, gegenüberliegenden Schweißbalken zusammen, der ebenfalls einen Schweißdraht tragen kann. Da dieser Sachverhalt an sich bekannt ist, wurde auf die Darstellung dieses Gegenbalkens verzichtet.

## Patentansprüche

1. Vorrichtung zum Verschweißen von heißsiegelbaren Verpackungsfolien, insbesondere zum Warmpreßschweißen von Kunststoffbeuteln, mit zumindest einem verfahrbaren Schweißbalken, an dem ein elektrisch beheizter Schweißdraht angeordnet ist, der an seiner den Folien zugewandten Seite eine Abdeckung aufweist,
dadurch gekennzeichnet,
daß die Abdeckung die Form eines den Schweißdraht (3) umgebenden Schlauches (8) aufweist.

2. Vorrichtung nach Anspruch 1,
dadurch gekennzeichnet,
daß der Schlauch (8) durch Verspannung des Schweißdrahtes (3) am Schweißbalken (1) fixiert ist.

3. Vorrichtung nach Anspruch 1,
dadurch gekennzeichnet,
daß der Schlauch (8) aus Kunststoff, insbesondere aus Teflon besteht.

4. Vorrichtung nach Anspruch 1,
dadurch gekennzeichnet,
daß der Schweißdraht (3) mit seinem Schlauch (8) auf einem Kunststoff-Einsatz (7) des Schweißbalkens (1) angeordnet ist.

5. Vorrichtung nach Anspruch 1,
dadurch gekennzeichnet,
daß der Schlauch (8) den Schweißdraht (3) nahezu spielfrei umgibt.

6. Vorrichtung nach Anspruch 1,
dadurch gekennzeichnet,
daß der Schlauch (8) eine in Längsrichtung laufende Überlappung aufweist und daß der durch die Überlappung gebildete, zweilagige Bereich des Schlauches an der der Verpackungsfolie abgewandten Seite liegt.
